**Europäisches Patentamt**

**European Patent Office**

**Office européen des brevets**

(19)

(11) **EP 0 766 026 A1**

(12) **EUROPÄISCHE PATENTANMELDUNG**

(43) Veröffentlichungstag:
02.04.1997 Patentblatt 1997/14

(51) Int Cl.⁶: **F16J 3/04**

(21) Anmeldenummer: 96890153.8

(22) Anmeldetag: 27.09.1996

(84) Benannte Vertragsstaaten:
**AT BE DE FR GB IT NL SE**

(30) Priorität: **27.09.1995 AT 1604/95**

(71) Anmelder: **Beckmann, Otto, Dr.**
**2514 Traiskirchen (AT)**

(72) Erfinder:
• **Beckmann, Otto, Dr.**
**D-2514 Traiskirchen (DE)**
• **Beckmann, Otto**
**D-80339 München (DE)**

(74) Vertreter: **Vinazzer, Edith, Dipl.-Ing.**
**Schönburgstrasse 11/7**
**1040 Wien (AT)**

(54) **Flexible rohrförmige Konstruktion**

(57)     Flexible rohrförmige Konstruktion, die aus insbesondere vier eckigen Flächenelementen aufgebaut ist, welche von längsorientierten sowie von querorientierten Faltenzügen begrenzt sind, wobei die längsorientierten Faltenzüge Bergfalten aufweisen oder sich aus Bergfalten zusammensetzen. Mindestens zwei der längsorientierten Faltenzüge (2,2',2',2''') verbinden Gegenbruchknoten (G,G',G'',G''') und mindestens zwei der längsorientierten Faltenzüge (3,3',3a'',3b'',3''') verbinden miteinander Pyramidenknoten (P,P',P'',P''') und Sattelknoten (S,S',S'',S''').

Fig.2

**Beschreibung**

Die gegenständliche Erfindung betrifft eine flexible rohrförmige Konstruktion, die aus insbesondere viereckigen Flächenelementen aufgebaut ist, welche von längsorientierten sowie von querorientierten Faltenzügen begrenzt sind wobei die längsorientierten Faltenzüge Bergfalten aufweisen oder sich aus Bergfalten zusammensetzen.

Solche flexible rohrförmige Konstruktionen sind im allgemeinen aus ebenen, viereckigen Flächenelementen aufgebaut, die mit ihren Kanten ein Netzwerk von Knicken ergeben. Dabei sind Knicke, die zum Betrachter hin vorspringen sogenannte "Bergfalten", einspringende Knickkanten sogenannte "Talfalten". Diese rohrförmigen Konstruktionen besitzen daher eine Vielzahl von Knotenpunkten, wo vier Knicklinien zusammenlaufen.

Sowohl zum Verständnis der gegenständlichen Erfindung als auch zum Verständnis des weiter unten noch behandelten Standes der Technik ist die folgende Definition von drei verschiedenen Typen von solchen Knoten von Bedeutung.

Gegenbruchknoten sind solche Knoten, wo drei Bergfalten und eine Talfalte zusammentreffen. Die Winkelsumme um den Knoten kann kleiner, größer oder gleich 360° sein. Im letzten Fall handelt es sich um eine Faltung, die aus der Ebene entwickelbar ist. Als Symbol für einen Knotenpunkt ist G gewählt.

Pyramidenknoten sind solche Knoten, wo vier Bergfalten zusammentreffen. Die Winkelsummen um den Knoten ist kleiner als 360°. Als Symbol für einen Knotenpunkt ist P gewählt.

Sattelknoten sind solche Knoten, wo zwei Bergfalten und zwei Talfalten zusammentreffen. Die Winkelsumme um den Knoten ist größer als 360°. Als Symbol für einen solchen Knotenpunkt ist S gewählt.

Zum bekannten Stand der Technik gehören zwei verschiedene Typen von Faltbälgen, deren Flächenelemente gleichschenkelige Trapeze sind, die über gleichartige Kanten zusammenhängen. Die parallelen Seiten der Trapeze verlaufen dabei jeweils quer zur Längsrichtung der Bälge. Beide Typen weisen in Längsrichtung Faltenzüge auf, die ausschließlich aus Bergfalten bestehen. Dabei enthält der eine Typ, der etwa von Fotobälgen her bekannt ist, ausschließlich Gegenbruchknoten. Der zweite Typ besitzt sowohl Pyramidenknoten als auch Sattelknoten. Solche Bälge sind über ihre Länge periodisch eingeschnürt. Diese Einschnürungen ergeben sich aus querorientierten Faltenzügen, die ausschließlich aus Talfalten bestehen, die Sattelknoten verbinden. Die dazu alternierenden Ausweitungen im Querschnitt ergeben sich aus Bergfalten, die Pyramidenknoten miteinander verbinden. Bei beiden Balgtypen bauen sich bei Beanspruchung im Bereich der Knoten hohe Spitzenspannungen auf, wodurch die Einsetzbarkeit und die Lebensdauer stark eingeschränkt sind. Ein häufig benutzter Ausweg ist daher der Einsatz von sehr weichen Materialien, die dann jedoch oft durch Amierungen verstärkt werden müssen.

Im Schweizer Patent CH- 666 732 A5 sind ferner mehrlagige, halboffene Abdeckbälge, deren Aufbau, bzw. deren Konstruktion Pyramiden- und Sattelknoten umfaßt, beschrieben. Die dort beschriebene Erfindung besteht darin, daß die Decke über die beiden Schenkel dachartig vorsteht und die Spitzen der inneren Lage der Schenkel sich an der inneren Lage der Decke abstützen. Die Decke und die Schenkel besitzen auch eine gemeinsame zusammenhängende innere Lage, die im Bereich zwischen den inneren Falten der Schenkel der Decke mit einzelnen, nicht aneinanderstoßenden Ausstanzungen versehen sein kann. Bei dieser bekannten Konstruktion sind die Pyramidenknoten stärker auf Kraftschluß ausgelegt als die Sattelknoten, denen bei Beanspruchung die Möglichkeit des Nachgebens eingeräumt ist. Damit bleibt auch diese bekannte Konstruktion an die Verwendung weicher Materialien gebunden, bzw. benötigt bei stärkerer Belastung den Einsatz von Armierungen, wobei diesbezüglich sogenannte Latzbänder oder Stahldrähte und Kunststoffäden erwähnt sind.

Aus dem Deutschen Patent 2 436 062 C2 ist ein weiterer Balgtyp bekannt, bei dem es sich um einen Dichtungsbalg handelt, dessen Konstruktion sich von einer mehrgängigen Spiralkonstruktion ableitet. Bei diesem Balgtyp liegen mehrere schräg zur Längsachse verlaufende Längsfalten vor, wobei sich der Abstand zwischen der Außenkante und der Innenkante jeder Längsfalte fortlaufend ändert und Außenkante und Innenkante an den Längsfaltenenden jeweils im spitzen Winkel zusammenlaufen. Anders als bei konventionellen Bälgen liegen hier im Querschnitt mehrere einspringende Knicke vor. Dieser bekannte Balg besitzt daher einen etwa „sternförmigen" Querschnitt und ist zwar gut beweglich, hat aber den Nachteil einer erhöhten Verbeulbarkeit.

Es ist daher ein Ziel der vorliegenden Erfindung, gut biegbare und in Längsrichtung weitgehend deformierbare, dabei aber verbeulbeständige, rohrförmige Konstruktionen anzubieten, die bei mechanischer Beanspruchung weniger Spitzenspannungen entwickeln als herkömmliche Typen. Neben diesem auf hohe Lebensdauer gerichteten Ziel, ist es ein weiteres Ziel, bei solchen rohrförmigen Konstruktionen vergleichsweise harte Materialien einlagig einsetzen zu können, um die Verwendung von Armierungen zu vermeiden. Die Erfindung soll auch eine Fertigung in wenigen Arbeitsschritten erlauben und den Einsatz von gut recyclefähigen Produkten zulassen.

Die gesetzten Ziele werden erfindungsgemäß dadurch erreicht, daß mindestens zwei der längsorientierten Faltenzüge Gegenbruchknoten und mindestens zwei der längsorientierten Faltenzüge Pyramiden- und Sattelknoten miteinander verbinden.

Nach der Erfindung wird daher eine rohrförmige Konstruktion geschaffen, bei der die auftretenden Spannungen im wesentlichen Biegespannungen um die Faltenzüge sind, Querschnittsverbiegungen und Spitzenspannungen im Bereich der Knickknoten sind somit weitgehendst vermieden.

Weitere vorteilhafte Ausgestaltungen und Weiterentwicklungen der Erfindung sind in den Unteransprüchen enthalten.

Die Erfindung wird nun anhand der Zeichnung, die mehrere Ausführungsbeispiele darstellt, näher erläutert. Dabei sind in den Zeichnungsfiguren 1 bis 4 unterschiedliche Ausführungsformen von erfindungsgemäßen rohrförmigen Konstruktionen dargestellt.

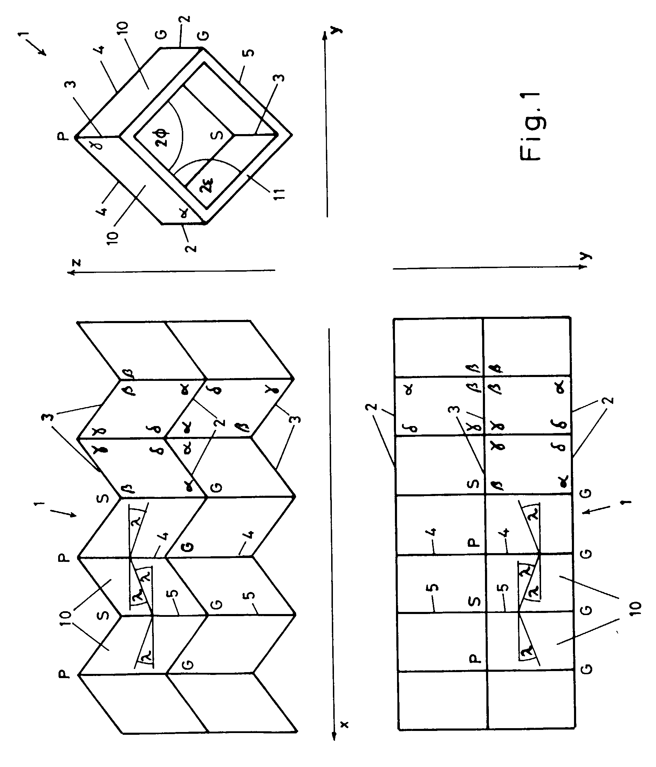

Fig. 1 stellt eine einfache erfindungsgemäße Konstruktion 1 dar. Der Grundriß ist links unten, der Aufriß links oben und der Seitenriß rechts oben zu ersehen. Die Konstruktion ist aus gleichartigen Parallelogrammen 10 aufgebaut, wobei $\alpha = \gamma = 65°$, und $\beta = \delta = 115°$. Die Dicke der Konstruktion 1 ist an der Querschnittsfläche 11 erkennbar. In der x-Richtung - das ist hier die Längsrichtung der Konstruktion 1 - verlaufen vier Faltenzüge 2,3 die ausschließlich Bergfalten enthalten. Die beiden Faltenzüge 2 verbinden Gegenbruchknoten G. Die beiden Faltenzüge 3 verbinden alternierende Abfolgen von Pyramidenknoten P und Sattelknoten S. Senkrecht zur x-Richtung liegen in sich geschlossene, querorientierte Faltenzüge 4 und 5, die jeweils zwei Bergfalten und zwei Talfalten enthalten. Der Winkel $\lambda$, der im weiteren "Knickwinkel" genannt wird, beschreibt die Knickung um die Faltenzüge 4 und 5. Die Winkel $\varepsilon$ und $\phi$ sind querschnittsbezogen und beschreiben die Lage benachbarter Einzelknickungen in den Faltenzügen 4 und 5, wobei um die Gegenbruchknoten G der Winkel $2\varepsilon$ vorliegt, um die Pyramidenknoten P und die Sattelknoten S hingegen der Winkel $2\phi$.

Diese Winkel sind miteinander verknüpft.Für die Gegenbruchknoten G gilt:

Gleichung 1: $\quad \tan \varepsilon = 1 / ( \sin \lambda \cdot \tan \alpha )$ .

Für die Pyramidenknoten P und die Sattelknoten S gilt:

Gleichung 2: $\quad \tan \phi = \sin \lambda \cdot \tan \gamma$ .

Für die Konstruktion 1 gilt $\alpha = \gamma$, woraus

Gleichung 3: $\quad \varepsilon + \varphi = 90°$ folgt.

Für alle Knickwinkel $\lambda$ im Bereich von 0° bis 90° verhalten sich die Winkel $\varepsilon$ und $\phi$ exakt gegenläufig. Dies bedeutet auch, daß die Winkelsumme in den Vierecken der Faltenzüge 4 und 5 stets gleich bleibt, und die auftretenden Spannungen in der Konstruktion 1 im wesentlichen Biegespannungen um die Knickkanten sind.

Demgegenüber werden in herkömmlichen Bälgen bei Längenänderung die querschnittsbezogenen Winkel stets gleichsinnig verändert, was zu Querschnittsverbiegungen und Spitzenspannungen in den Knickknoten führt.

Die Größe des Knickwinkels $\lambda$ wird bevorzugt zwischen 15 und 80°, insbesondere zwischen 25 und 70°, gewählt. Dies gilt im übrigen auch für die weiter unten noch beschriebenen Ausführungsformen, wo der Knickwinkel mit $\lambda'$, $\lambda''$, $\lambda'''$ bezeichnet ist.

Die Konstruktion 1 strebt sowohl bei völliger Kompression als auch bei völliger Dehnung dem Volumen Null zu. Dazwischen liegt ein von der nachstehenden Gleichung 4 beschriebenes Maximalvolumen, welches bei wirksamen Innendruck angestrebt wird:

Gleichung 4: $\quad \tan^2 \alpha / ( 2 + \tan^2 \alpha ) = \tan^2 \phi$

Im vorliegenden Fall ($\alpha = 65°$) liegt das Maximalvolumen bei $\phi = 40°$. Solche Gleichgewichtslagen lassen sich vorteilhaft für Konstruktionen hoher Lebensdauer, aber auch für Hochdruckrohre nutzen.

Die Deformierbarkeit der Konstruktion 1 ist naturgemäß nicht rotationssymmetrisch. Erfindungsgemäße Konstruktionen mit gutem und annähernd rotationssymmetrischem Biegeverhalten lassen sich erreichen, wenn die Anzahl der längsorientierten Faltenzüge über den Querschnitt erhöht wird.Wird das Konstruktionsprinzip aus Fig. 1 beibehalten, so hat die Anzahl der längsorientieten Faltenzüge ein Vierfaches einer ganzen Zahl zu betragen. In allen diesen Konstruktionen alternieren Faltenzüge, die nur Gegenbruchknoten enthalten, mit Faltenzügen, die nur Pyramiden- und Sattelknoten enthalten. Die in Fig. 1 vorliegenden Parallelogramme werden bei all diesen Konstruktionen zu ungleichschenkeligen Trapezen. Während die Konstruktion 1 aus Fig. 1 unabhängig vom Knickwinkel $\lambda$ stets die Winkelkonstanz im Viereck nach Gleichung 3 wahrt, gilt diese spannungsfreie Deformierbarkeit bei ungleichem $\alpha$ und $\gamma$ nur noch für "Vorzugslagen", für die $\varepsilon = \phi$ zutrifft. Bei kleinen Änderungen von $\lambda$ bleibt demnach in einer Vorzugslage die Winkelsumme im polygonen Querschnitt gleich.Es treten zwar Biegespannungen in den Knicken, nicht jedoch Deformationsspannungen in den Trapezen auf. In solchen Vorzugslage ist die Überlegenheit der erfindungsgemäßen Konstruktionen gegenüber herkömmlichen Konstruktionen besonders deutlich. Dies gilt nicht nur für die Deformierbarkeit entlang der Längsachse, sondern auch für die Biegbarkeit.

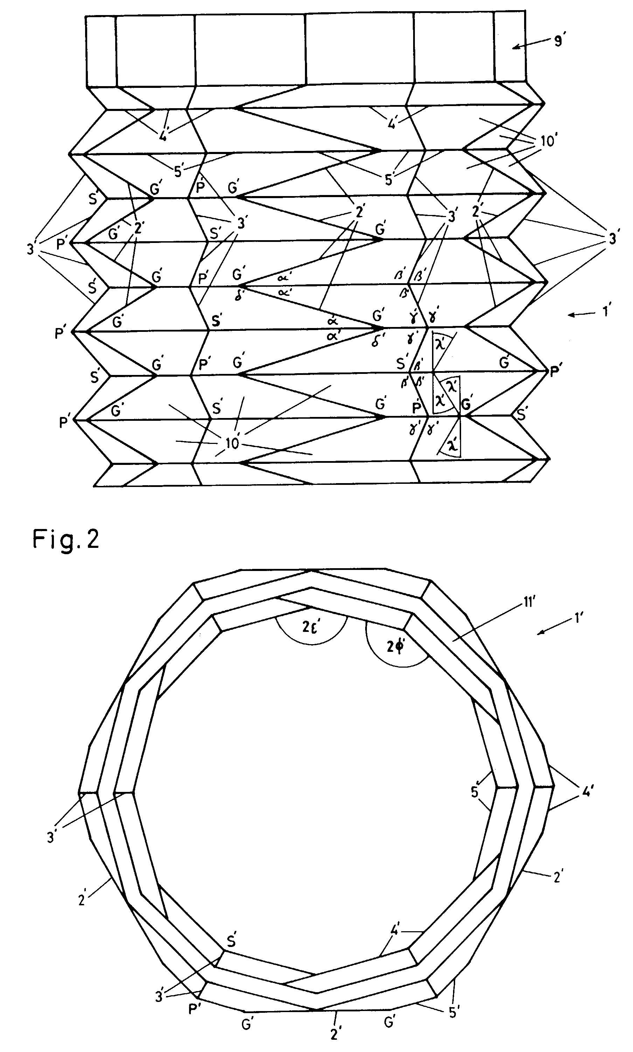

Fig. 2 zeigt eine weitere erfindungsgemäße Konstruktion 1', oben in Seitenansicht und unten in Draufsicht, mit zwölfkantigem Querschnitt, über dem alternierend sechs längsorientierte Faltenzügen 2', welche Gegenbruchknoten G' verbinden, und sechs längsorientierte Faltenzüge 3', welche Pyramidenknoten P' und Sattelknoten S' verbinden, angeordnet sind. Bauelemente der Konstruktion 1' sind nun ungleichschenkelige Trapeze 10', die mit ihren zueinander parallen Seiten querorientierte Faltenzüge 4'und 5' bilden. Zwischen den zusammentreffenden Falten werden an den Gegenbruchknoten G' Winkel $\alpha'$ und $\delta'$ gebildet, an den Pyramidenknoten P' spitze Winkel $\gamma'$ und an den Sattelknoten S' stumpfe Winkel $\beta'$. Die Winkel $\epsilon'$ und $\phi'$ beschreiben hingegen die Lage der Einzelknickungen in den Faltenzügen 4' und 5'. Um die Vorteile der Vorzugslage zu nutzen, wurde $\epsilon' = \phi' = 75°$ gewählt. Mit dem gewählten Knickwinkel $\lambda' = 40°$ ergeben sich mit Gleichung 1 und Gleichung 2 die Trapezwinkel $\alpha' = 22,6°$ und $\gamma = 80,2°$.

Die Konstruktion 1' wird oben mit einem zwölfkantigen Prisma 9' der Wanddicke 11' abgeschlossen. Das Prisma 9' schneidet die angrenzenden Trapeze 10' auf halber Höhe und ist deswegen gleichseitig. Das Prisma 9' eignet sich gut als Ansatz für Flansche. Bekanntlich sind Flanschansätze kritische Stellen, die häufig die Lebensdauer eines Balges bestimmen. Hier ist eine weitere Möglichkeit zur Erhöhung der Flexibilität zu erwähnen, die sowohl für konventionelle als auch erfindungsgemäße Konstruktionen wirksam ist. Es ist dies die Anhebung des Knickwinkels $\lambda'$. Es kann sinnvoll sein, den Knickwinkel $\lambda'$ innerhalb einer Konstruktion zu ändern, so zum Beispiel im Flanschbereich stufenweise anzuheben. Der Übergang von einem Knickwinkel zum anderen erfolgt an den querorientierten Faltenzügen 4' oder 5'. Durch hohe Knickwinkel $\lambda'$ kann im Flanschbereich bei Deformationen die Konstanz des Querschnitts 11' relativ gut gewahrt werden.

Allgemein gilt es, die Vorteile hoher Knickwinkel gegen die Nachteile wie höherer Materialbedarf, schlechtere Fertigbarkeit und schlechtere Durchströmbarkeit abzuwägen. So wird man für dynamisch weniger beanspruchte Konstruktionen, wie etwa Isolierrohre, mit Knickwinkel um 30° gute Ergebnisse erzielen können, während etwa für Flanschansätze Knickwinkel > 45° angemessen sind.

Verschließt man in Fig. 2 die offenen Enden der Konstruktion 1' durch zwölfeckige Abschlüsse, so gelangt man zu pneumatischen Federkonstruktionen, die leicht und platzsparend ausgelegt werden können. Auch hier ist es vorteilhaft, den Knickwinkel $\lambda'$ zu den zwölfeckigen Abschlüssen hin stufenweise anzuheben.

Eine weitere interessante Anwendung der Konstruktion 1 und 1' ist für Wandungen voll zusammenpreßbarer Tuben zu nennen. Durch ein Zusammenpressen einer Tube entlang von geordneten Faltungen lassen sich Vorteile hinsichtlich Dosierbarkeit, Auspreßbarkeit und Bruchbeständigkeit erzielen.

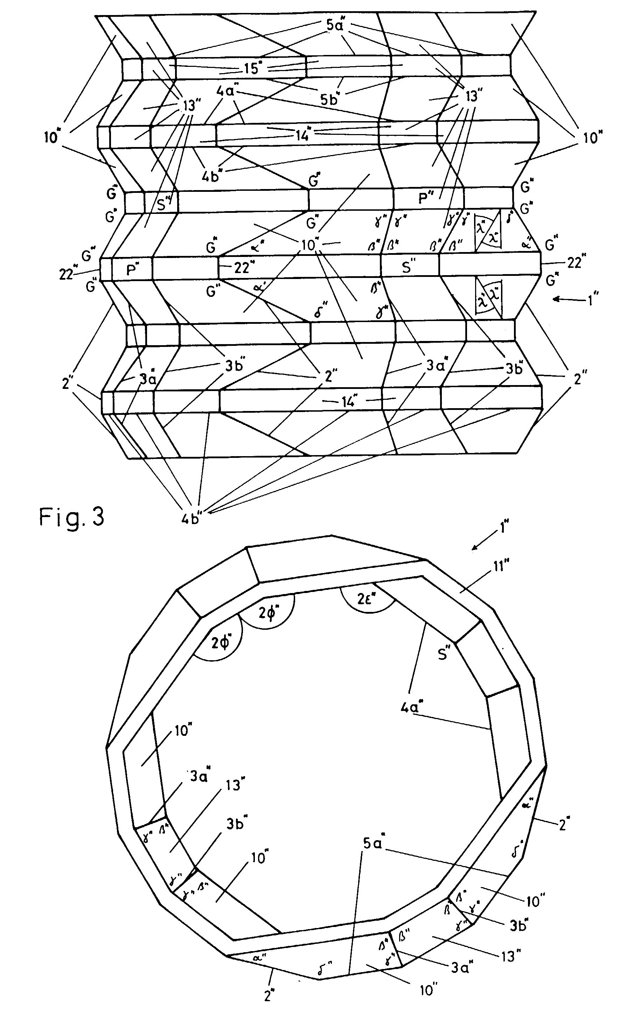

Die in Fig. 1 und Fig. 2 dargestellten Konstruktionen 1,1' enthalten relativ scharfe querliegende Knicke, was für das Fließen diverser Medien innerhalb dieser Konstruktionen zu hohen Fließwiderständen führen kann. Abhilfe kann hier das Konzept der "Einschübe" schaffen, welches im Detail noch anhand der Konstruktion gemäß Fig. 3 beschrieben wird. Grundsätzlich werden hierbei Faltenzüge, die in einer Symmetrieebene liegen, verdoppelt, wobei die Spiegelbildsymmetrie erhalten bleibt. Zwischen den verdoppelten Faltenzügen, die im weiteren mit dem Zusatz a und b bezeichnet werden, liegen nun die als Einschübe bezeichneten Flächenzüge, welche die Schärfe der Knicke entscheidend mildern. Solche Quereinschübe vermindern jedoch die Deformierbarkeit der Konstruktionen in der Längsrichtung. Für die meisten Anwendungen wird man darum den Anteil der Quereinschübe an der Oberfläche der Konstruktionen auf weniger als 60% beschränken.

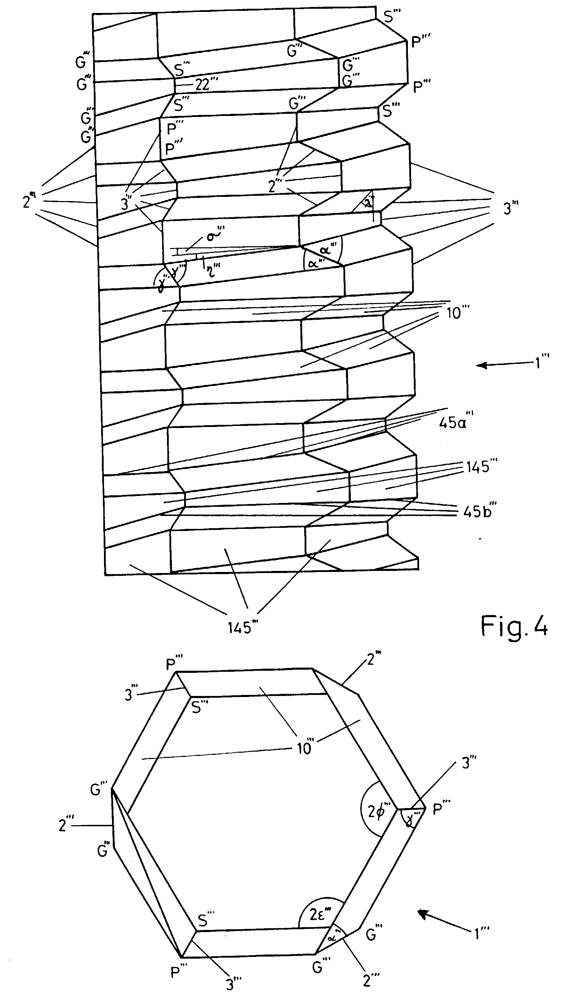

Verschiedene Arten von Einschüben sind möglich. Die erwähnten, zusätzlich mit a und b gekennzeichneten, spiegelbildlichen Faltenzüge können sowohl in zueinander parallelen Flächen, als auch in zueinander geneigten Flächen liegen. Insbesondere für querliegende Einschübe sind auch Ausführungen interessant, die von nicht-planaren Faltenzügen begrenzt werden. Die möglichen Vorteile solcher "gekröpften" Einschübe werden weiter unten bei Fig. 4 besprochen Fig. 3 zeigt eine Konstruktion 1" in Seitenansicht und in Draufsicht, die acht längsorientierte Faltenzüge 3a",3b" und vier längsorientierte Faltenzüge 2" enthält und auf ungleichschenkeligen Trapezen basiert. Neben den querorientierten Einschüben 14",15" liegen auch längsorientierte Einschübe 13" vor, wodurch ein zwölfeckiger Querschnitt 11" entsteht.

Die querorientierten Einschübe 14" und 15", die jeweils zwischen zwei zueinander parallelen querorientierten Faltenzügen 4a",4b" und 5a", 5b" liegen, bestehen aus Rechtecken und bewirken ein Abstumpfen der querorientierten Faltenzüge 4a",4b",5a",5b". Ferner haben sich die Gegenbruchknoten G" verdoppelt; sie sind nun durch kurze Kanten 22" miteinander verbunden.

Die längsorientierten Einschübe 13" sind keilförmig ausgeführt und liegen zwischen den vier Paaren von Faltenzügen 3a",3b", welche mit vier längsorientierten Faltenzügen 2" alternieren. Die Einschübe 13" sind gleichschenkelige Trapeze sowie Rechtecke, deren Form sich durch das Kreuzen der Einschübe 13" mit den Einschüben 14" beziehungsweise 15" ergibt. Diese Rechtecke, die mit P" und S" bezeichnet sind, sind auf die Vervierfachung der Pyramiden- und Sattelknotenpunkte zurückzuführen.

Die Keilform der Einschübe 13" ist so gewählt, daß keine zusätzlichen Winkel auftreten. Die Winkel $\beta"$ und $\gamma"$ der ungleichschenkeligen Trapeze tauchen auch in den gleichschenkelige Trapezen der längsorientierten Einschübe 13" auf. Im Querschnitt treten nur die Winkel $\epsilon"$ und $\phi"$ auf, und der Knickwinkel $\lambda"$ gilt auch für die Einschübe 13". Auch in Fig. 3 wurden die Winkel so gewählt, daß eine Vorzugslage vorliegt:

$$\lambda" = 40°, \; \alpha" = 34,1°, \; \gamma" = 83,1°, \; \epsilon" = 66,5°, \; \phi" = 79,3°.$$

Die Einschübe bieten zusätzliche Möglichkeiten, flexible Rohrkonstruktionen zu modifizieren. So kann in Fig. 3 der Querschnitt der Konstruktion 1" durch Verbreiterung der längsorientierten Einschübe 13" quadratisch oder rechteckig gestaltet werden. Es werden so Gebilde erhalten, die dem herkömmliche Fotobalg-Typ ähnlich sehen. Anstelle eines Gegenbruch-Faltenzuges hat jedoch die erfindungsgemäße Konstruktion jeweils drei längsorientierte Faltenzüge 3a",2",3b".

Erwähnt sei ferner, daß beim Fertigungsprozess die Faltenzüge , insbesondere die Faltenzüge 4a", 4b", 5a", 5b", nicht als scharfe Kanten sondern leicht abgerundet entstehen.

Eine andere Möglichkeit der Modifikation ist die keilförmige Gestaltung der querorientierten Einschübe 14" und 15", womit gekrümmte Rohre gestaltet werden können. Es gibt eine Fülle von unterschiedlichen Konstruktionen, die ihre Flexibilität der Kombination von längsorientierten Falten mit Gegenbruchknoten mit längsorientierten Falten mit Pyramiden- und Sattelknoten verdanken. Erwähnt seien etwa Anordnungen, bei denen paarige, spiegelbildliche Längsfaltungen mit Gegenbruchknoten, die gleichschenkelige Trapeze einschließen, mit nicht verdoppelten Faltenzügen, die Pyramiden-und Sattelknoten enthalten, alternieren. Auch hier lassen sich Vorzugslagen angeben. Die Anzahl der längsorientierten Faltenzüge ist bei diesem Typ ein Vielfaches von drei.

Eine Klasse von bevorzugten Ausführungen eröffnet sich durch Konstruktionen, bei denen die querorientierten Faltenzüge nicht mehr in sich geschlossen sind, sondern in zumindest einem spiraligen Polygonzug zusammenfallen.

Neben eingängigen und mehrgängigen Schrauben sind auch ½-gängige, 1 ½-gängige, 2 ½-gängige usw. Schrauben möglich, da in den querorientierten Faltenzügen Berg - und Talfalten abwechseln.Beim Vorliegen einer gleichen aber ungeraden Anzahl von längsorientierten Faltenzügen, die Gegenbruchknoten bzw. Pyramidenknoten und Sattelknoten verbinden, können etwa mit ½-gängigen Schrauben 6-, 10-, 14- oder 18- eckige Querschnitte entstehen.

Fig. 4 zeigt eine weitere erfindungsgemäße Konstruktion 1''' als ½ -gängiges Spiralrohr, das alternierend drei längsorientierte Faltenzüge 2''' und drei längsorientierte Faltenzüge 3''' enthält. Die Faltenzüge 2''' verbinden wiederum Gegenbruchknoten G''', die Faltenzüge 3''' abwechselnd je zwei Pyramidenknoten P''' und je zwei Sattelknoten S'''. Die querorientierten Faltenzüge sind zwei spiralige Polyganzüge 45a''',45b''', die einen spiralig und gekröpft ausgeführten Einschub 145''' zwischen sich einschließen. Analog zu den bereits beschriebenen Ausführungsformen liegen auch bei der Konstruktion 1''' Winkel $\alpha'''$ im Bereich der Gegenbruchknoten G''', Winkel $\gamma'''$ im Bereich der Pyramidenknoten P''', der Knickwinkel $\lambda''$ und Winkel $\varepsilon'''$ und $\phi''$ vor. Der Steigungswinkel der Spirale ist mit $\sigma'''$ bezeichnet, $\eta'''$ bezeichnet den „Kröpfungswinkel". Die im dargestellten Ausführungsbeispiel gewählten Winkel sind:
$\lambda'''$= 45°, $\alpha'''$= 43,7, $\gamma'''$= 68,5°, $\eta'''$= 2,9°

Hierbei ist $\eta'''$ der "Kröpfungswinkel", der trotz seiner Kleinheit eine Reihe positiver Auswirkungen hat. Im Vergleich mit einem äquidistanten Einschub erzielt man bei vorgegebenem $\lambda'''$ ein höheres $\alpha'''$ (43,7° anstelle von 39,2°), wodurch Torsionssteifigkeit und Verbeulbeständigkeit verbessert werden. Zudem sind nun die Abstände 22''' zwischen den verdoppelten Sattelknoten S''' kleiner als bei den entsprechenden Gegenbruchknoten G''' oder Pyramidenknoten P''', woraus sich gemeinsam mit dem höheren $\alpha'''$ Vorteile in der Durchströmbarkeit solcher Konstruktionen ergeben.

Schließlich ist auf die Möglichkeit hinzuweisen, alle genanntem Konstruktionen gekrümmt auszuführen, indem die Elemente der Konstruktionen (Parallelogramme oder Trapeze) durch weniger symmetrische Vierecke ersetzt werden.

Die Materialien, die für die vorgeschlagenen Konstruktionen in Betracht kommen, können härter und weniger deformierbar sein, als bei vergleichbaren herkömmlichen Konstruktionen. Bei harten Materialien sind möglichst dünnwandige Auslegungen oft sehr vorteilhaft, sie erlauben nicht nur ein Absenken von Gewicht und Materialkosten, sondern auch ein Absenken der Biegespannungen um die Knicke. So wird man fallweise Kunststoffe mit oder ohne Faserverstärkung, aber auch flächiges Metall, anstelle von Weichgummi oder gummiertem Gewebe einsetzen können. Bei dünnwandiger Ausführung sind selbst so spröde Materialien wie Glas oder Keramik in Betracht zu ziehen

Mit dieser Ausweitung der Materialpalette für erfindungsgemäße Rohre werden eine Reihe von Forderungen an das Produkt leichter erfüllbar, als mit herkömmlichen Konstruktionen. Hier sind Themen wie Hochtemperatur- und Tieftemperaturbeständigkeit gegen chemische und mechanische Einflüsse, Dichtigkeit gegen Gase und Flüssigkeiten sowie die ökologischen Gesichtpunkte der Emissions-Begrenzung und der Wiederverwertbarkeit zu nennen.

Die vorgeschlagenen Konstruktionen erlauben ein Eindringen in Segmente in denen flexible Rohre mit Knickmustern bisher nicht zur Anwendung kamen. Als Beispiel sei die Konstruktion in Fig. 1 genannt, die bei Auslegung in der Gleichgewichtslage Sperrlagen in Hochdruckschläuchen ersetzen kann. Denkbar sind voll stauchbare Isolierbälge nach Fig. 1 oder 2, die Vorteile im Transport und in der Montage bieten. Die Eignung von Fig. 1 und Fig. 2 für faltbare Tubenwandungen wurde schon angesprochen. Das Ausführungsbeispiel nach Fig. 3 eignet sich zum Beispiel als Abdeckbalg für Gelenke, etwa bei Bohrgestängen. Auch die Eignung sämtlicher Beispiele für Zwischenstücke in Rohr- oder Tunnelsystemen, um thermische Spannungen oder mechanischen Schock abzufangen, sei erwähnt.

Auch die Anwendung der vorgeschlagenen flexiblen Rohre in sonst herkömmlichen Schlauchkonstruktionen kann vorteilhaft sein. Das Durchdiffundieren von Flüssigkeiten oder Gasen durch Schläuche kann durch Sperrlagen verhindert werden, die erfindungsgemäß ausgeführt sind.

Schließlich sind solche Konstruktionen, wegen ihrer ansprechenden Form, auch über die reine Zweckfunktion hinaus attraktiv, und damit selbst für "fancy goods" wie verknotbare Party-Strohhalme und dgl. anwendbar.

**Patentansprüche**

1. Flexible rohrförmige Konstruktion, die aus insbesondere viereckigen Flächenelementen aufgebaut ist, welche von längsorientierten sowie von querorientierten Faltenzügen begrenzt sind, wobei die längsorientierten Faltenzüge Bergfalten aufweisen oder sich aus Bergfalten zusammensetzen, dadurch gekennzeichnet, mindestens zwei der längsorientierten Faltenzüge (2,2', 2",2"') Gegenbruchknoten (G, G', G",G"') und mindestens zwei der längsorientierten Faltenzüge (3, 3', 3a", 3b",3"') Pyramidenknoten (P, P', P",P"') und Sattelknoten (S, S', S",S"') miteinander verbinden.

2. Flexible rohrförmige Konstruktion nach Anspruch 1, dadurch gekennzeichnet, daß die querorientierten Faltenzüge (4,4',4a",4b"; 5,5',5a",5b") entweder in sich geschlossene Faltenzüge oder spiralige Faltenzüge (45a"',45b"') sind, wobei die querorientierten Faltenzüge (4,4',4a",4b"; 5,5',5a",5b") sich sowohl aus Bergfalten als auch aus Talfalten zusammensetzen und neben Gegenbruchknoten (G, G', G",G"') auch Pyramidenknoten (P, P',P",P"') und/ oder Sattelknoten (S, S', S",S"') enthalten.

3. Flexible rohrförmige Konstruktion nach Anspruch 1 oder 2, dadurch gekennzeichnet, daß die querorientierten Faltenzüge (4,4',4a",4b"; 5,5',5a",5b") jeweils in einer Ebene verlaufen.

4. Flexible rohrförmige Konstruktion nach einem der Ansprüche 1 bis 3, dadurch gekennzeichnet, daß sie um die querorientierten Faltenzüge (4,4'; 5,5') spiegelbildlich symmetrisch aufgebaut ist.

5. Flexible rohrförmige Konstruktion nach einem der Ansprüche 1 bis 4, dadurch gekennzeichnet, daß die an den querorientierten Faltenzügen (4,4',4a", 4b"; 5,5',5a",5b",45a"',45b"') ansetzenden Flächenelemente (10,10',10",10"') mit der Längsrichtung einen Knickwinkel ($\lambda,\lambda',\lambda''$, $\lambda'''$) einschließen, der zwischen 15° und 80° beträgt.

6. Flexible rohrförmige Konstruktion nach Anspruch 5, dadurch gekennzeichnet, daß der Knickwinkel ($\lambda$, $\lambda'\lambda''$,$\lambda'''$) zwischen 25° und 70° beträgt.

7. Flexible rohrförmige Konstruktion nach einem der Ansprüche 1 bis 6, dadurch gekennzeichnet, daß die querorientierten Faltenzüge (45a"', 45b"') spiralig verlaufen, wobei die Ganganzahl entweder ganzzahlig oder halbzahlig (1/2, 1 ½,etc.) ist.

8. Flexible rohrförmige Konstruktion nach einem der Ansprüche 1 bis 7, dadurch gekennzeichnet, daß die Anzahl der Gegenbruchknoten (G,G',G",G"') miteinander verbindenden längsorientierten Faltenzüge (2,2',2",2"') mit der Anzahl der längsorientierten Faltenzüge (3,3',3a",3b",3"'), die Pyramidenknoten (P,P',P",P"') und Sattenknoten (S,S',S",S"') miteinander verbinden, übereinstimmt, wobei über den Querschnitt jeweils einer dieser Faltenzüge (2,2',2",2"') mit dem anderen dieser Faltenzüge (3,3',3",3"') abwechselt, und wobei die Gesamtanzahl der einen Faltenzüge (2,2',2"') und der anderen Faltenzüge (3,3',3"') jeweils eine gerade Zahl, bei halbgängig spiraligen Konstruktionen (1"') jedoch jeweils eine ungerade Zahl ist.

9. Flexible rohrförmige Konstruktion nach einem der Ansprüche 1 bis 8, dadurch gekennzeichnet, daß die Anzahl der längsorientierten Faltenzüge (2), die Gegenbruchknoten (G) miteinander verbinden und die Anzahl der längsorientierten Faltenzüge (2), die Pyramidenknoten (P) und Sattelknoten (S) miteinander verbinden, jeweils zwei ist.

10. Flexible rohrförmige Konstruktion nach Anspruche 9, dadurch gekennzeichnet, daß die Flächenelemente Parallelogramme (10) sind, wobei die Gleichung

$$\tan^2 \alpha \, / \, (2 + \tan^2 \alpha) = \tan^2 \phi$$

erfüllt ist, wobei $\alpha$ der spitze Winkel der Parallelogramme ist und $\phi$ der halbe Winkel ist, den die querorientierten Faltenzüge (4,5) um die Pyramiden- und Sattelknoten (P,S) einschließen.

11. Flexible rohrförmige Konstruktion nach einem der Ansprüche 1 bis 8, dadurch gekennzeichnet, daß in der Ruhelage die halben Winkel ($\epsilon',\phi'$), die die querorientierten Faltenzüge (4',5') um die Gegenbruchknoten (G') bzw. Pyramiden- und Sattelknoten (P', S') einschließen, gleich groß sind.

12. Flexible rohrförmige Konstruktion nach einem der Ansprüche 1 bis 11, dadurch gekennzeichnet, daß jene Faltenzüge (3,3'; 4,4'; 5,5'),die jeweils in einer Spiegelebene liegen, unter Wahrung der Spiegelebene zu Faltenzügen (3a",3b"; 4a",4b"; 5a",5b") verdoppelt sind und nun Flächenzüge (13", 14", 15") einschließen.

13. Flexible rohrförmige Konstruktion nach Anspruch 12, dadurch gekennzeichnet, daß die Faltenzüge (3,3'; 4,4'; 5,5') unabhängig voneinander verdoppelt werden.

14. Flexible rohrförmige Konstruktion nach Anspruch 12 oder 13, dadurch gekennzeichnet, daß die verdoppelten Faltenzüge (3a",3b"; 4a",4b"; 5a",5b") zueinander parallel verlaufen.

**15.** Flexible rohrförmige Konstruktion nach Anspruch 12 oder 13, dadurch gekennzeichnet, daß die verdoppelten Faltenzüge zueinander keilförmig verlaufen.

**16.** Flexible rohrförmige Konstruktion nach Anspruch 12, dadurch gekennzeichnet, daß die verdoppelten Faltenzüge (45a''',45b''') nicht planar sondern gekröpft ausgebildet sind, wobei vorzugsweise der Abstand zwischen den verdoppelten Gegenbruchknoten größer ist als der Abstand zwischen den verdoppelten Sattelknoten.

**17.** Flexible rohrförmige Konstruktion nach einem der Ansprüche 1 bis 16, dadurch gekennzeichnet, daß die querorientierten Faltenzüge (45a''',45b''') einfache oder verdoppelte spiralige Polygonzüge sind und etwaige Einschübe (145''') spiralig sind.

**18.** Flexible rohrförmige Konstruktion nach einem der Ansprüch 1 bis 7, oder 12 bis 17, dadurch gekennzeichnet, daß die Anzahl der längsorientierten Faltenzüge (2'') und der längsorientierten verdoppelten Faltenzüge (3a'',3b'') jeweils gleich groß ist, wobei diese Anzahl entweder eine gerade Zahl ist oder bei halbgängig spiraligen Konstruktionen jeweils eine ungerade Zahl ist.

**19.** Flexible rohrförmige Konstruktion nach einem der Ansprüche 1 bis 18, dadurch gekennzeichnet, daß die Flächenelemente (10,10',10''; 13''; 14b''; 15'', 145''') zur Nachmodellierung einer Krümmung der Konstruktion asymmetrisch gestaltet sind.

**20.** Flexible rohrförmige Konstruktion nach einem der Ansprüche 1 bis 19, dadurch gekennzeichnet, daß ihr Querschnitt durch unterschiedliche Längen der Einzelknicke in den querorientierten Faltenzügen geändert wird, wobei insbesondere die Breite der längsorientierten Flächenzüge (13'') variiert wird.

**21.** Flexible rohrförmige Konstruktion nach einem der Ansprüche 1 bis 20, dadurch gekennzeichnet, daß die Größe des Knickwinkels ($\lambda,\lambda',\lambda'',\lambda'''$) variiert, wobei an zumindest einem der Endbereiche der Konstruktion (1,1',1'',1'') der Knickwinkel ($\lambda,\lambda',\lambda'',\lambda'''$) schrittweise angehoben wird.

**22.** Flexible rohrförmige Konstruktion nach einem der Ansprüche 1 bis 21, dadurch gekennzeichnet, daß sie bei der Herstellung von Isolierrohren für die Kabelverlegung, von Dämpfungselementen, von Luftfedern, von div. Balgkonstruktionen, von Verbindungsbälgen oder Gebläsebälgen, von Zwischenstücken für Rohr- und Tunnelsystemen, für Belüftungsschläuche, für Tuben, für Diffusionssperrschichten in Schläuchen und dgl. verwendet wird.

Fig.1

Fig.2

Fig. 3

Fig.4

Europäisches
Patentamt

**EUROPÄISCHER RECHERCHENBERICHT**

Nummer der Anmeldung

EP 96 89 0153

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | DE-A-24 36 062 (BMW)<br>* Anspruch 1; Abbildungen *<br>--- | 1 | F16J3/04 |
| A,D | CH-A-666 732 (HENNIG GMBH)<br>* Zusammenfassung; Abbildungen *<br>----- | 1 | |
| | | | **RECHERCHIERTE SACHGEBIETE (Int.Cl.6)**<br><br>F16J<br>F16L |

Der vorliegende Recherchenbericht wurde für alle Patentansprüche erstellt

| Recherchenort | Abschlußdatum der Recherche | Prüfer |
|---|---|---|
| DEN HAAG | 6.Januar 1997 | Narminio, A |

KATEGORIE DER GENANNTEN DOKUMENTE

X : von besonderer Bedeutung allein betrachtet
Y : von besonderer Bedeutung in Verbindung mit einer
  anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
  nach dem Anmeldedatum veröffentlicht worden ist
D : in der Anmeldung angeführtes Dokument
L : aus andern Gründen angeführtes Dokument
.......................................................................
& : Mitglied der gleichen Patentfamilie, übereinstimmendes
  Dokument

EPO FORM 1503 03.82 (P04C01)